# EUROPEAN PATENT SPECIFICATION

(11) **EP 2 179 918 B1**
(45) Date of publication and mention of the grant of the patent: **23.05.2018**
(21) Application number: 09173979.7
(22) Date of filing: 23.10.2009
(51) Int. Cl.: B64C 1/12, B64C 3/26, B64C 3/48

(54) **Corrugated skins for aircraft and methods of their manufacture**
Gewellte Häute für ein Flugzeug und Herstellungsverfahren dafür
Peaux ondulées pour un avion et leurs procédés de fabrication

(30) Priority: 27.10.2008 GB 0819630
(43) Date of publication of application: 28.04.2010
(73) Proprietor: GE Aviation Systems Limited, Bishops Cleeve Cheltenham Gloucestershire GL52 8SF (GB)
(72) Inventor: Potter, Kevin D., Backwell, Somerset BS48 3JJ (GB)
(74) Representative: Williams, Andrew Richard

(56) References cited:
- EP-A1- 0 739 847
- WO-A1-98/03398
- WO-A1-2008/068472
- GB-A- 2 428 417
- JP-A- 1 199 993
- JP-A- 2006 248 456
- US-A1- 2006 145 031

## Description

### Field

The present invention relates to skins for aircraft, in particular for the wings or fuselage thereof.

### Background

Morphing structures are increasingly being used in aircraft, whether they are unmanned air vehicles (UAVs) or larger aircraft. Such structures require a skin that can conform to the movements imposed by the morphing structure. Conventional materials used for making aircraft skin, for example sheet Aluminium, cannot fully recover from strains above a low level (less than 1% for most metals). Rubber materials are known for their ability to recover from high strains but have a very limited strength and stiffness.

The use of corrugated materials in traditional aircraft wing structures is known. Such materials are provided to increase the strength and stiffness of the wings, but are not adapted to allow any significant structural movement to occur. Moreover, these skins are generally intended only to supplement the strength and rigidity that are provided by the other structural features of the wing.

An aim of the present invention is to provide a skin that is stiff and strong in some directions but flexible and capable of accepting high levels of deformation in other directions.

US 2006/0145031 A1 relates to an aircraft wing, aircraft composite material and associated method of manufacturing. This document seeks to provide a wing which has both high bending flexibility in a chordal direction and high load bearing capacity and ability to retain wing shape in a span direction. In essence, US2006/0145031A1 provides a structure which is amenable to flexing in response to aerodynamic loadings.

The present invention provides a skin for a morphing structure of an aircraft according to claim 1 herein.

Advantageously, the skin of the present invention provides an adaptable structure that is strong and resistant to flexing along the corrugations and is flexible along a direction perpendicular to the corrugations. In some embodiments, the skin is sufficiently strong to avoid the need for internal structural elements commonly found within aircraft, such as the spars and ribs used to make wings, the necessary strength coming from the skin itself. It is thereby possible to reduce the weight of aircraft built using the skin.

In certain embodiments, the skin can be curved along the length of the corrugations. This provides a previously unavailable adaptibility in the possible uses of the skin, which retains its strength and relative rigidity along the corrugations and its flexibility perpendicular to the corrugations. The curved skin can thus be used to make irregularly shaped aircraft components.

In a further embodiment, a flap portion can be inserted in each corrugation and extends out of the corrugation sufficiently far to cover a portion of the skin. In this way, a substantially smooth aerodynamic skin surface can be produced. Preferably, the flaps extend out of a corrugation and are folded over to cover the adjacent corrugation. Further, the flaps preferably extend the entire length of the corrugations, so that the entire skin surface is covered and is substantially smooth.

The present invention also provides a method of manufacturing a skin for a morphing structure of an aircraft according to claim 9 herein.

There follows a detailed description of embodiments of the invention by way of example only with reference to the accompanying drawings, in which:
Fig. 1 is a schematic view of a corrugated skin section curved along the corrugations;
Fig. 2 is a schematic view of the skin section of Fig. 1 having an additional curvature perpendicular to the corrugations;
Fig. 3 shows a cross-sectional schematic view of the skin being manufactured with blade corrugations;
Fig. 4 shows a cross-sectional schematic view of the skin being manufactured with balanced corrugations;
Fig. 5 is a schematic view of a skin including rods disposed in the corrugations;
Fig. 6 is cross-sectional schematic diagrammatic view of a morphing structure for an aircraft;
Figs. 7, 8 and 9 show schematically an embodiment of the invention which utilises flaps between the corrugations;
Fig. 10 is a cross-sectional view of the skin according to Figs 7, 8 and 9 being manufactured;
Fig. 11 is a cross-sectional view of the skin including a manipulation means; and
Fig. 12 is a cross-sectional view of the skin shown in Fig. 11 wherein the manipulation means has been activated.

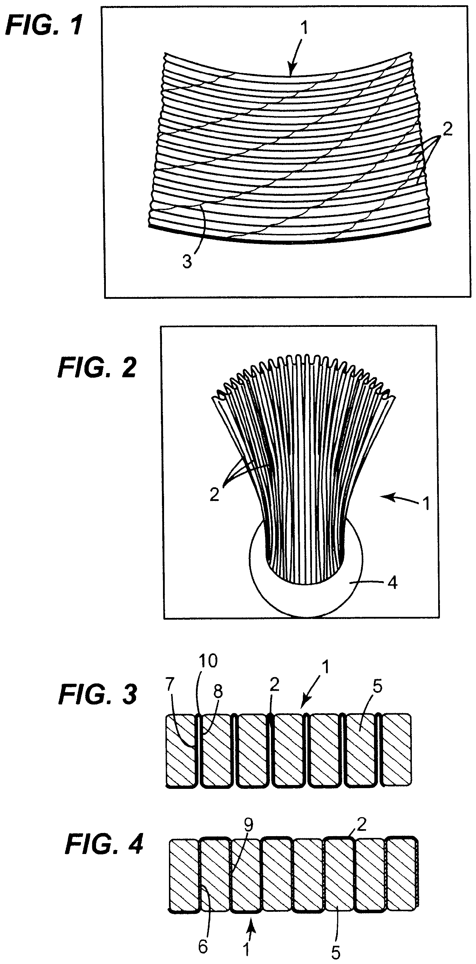

Fig. 1 is a schematic perspective view of a corrugated skin section 1 having a series of corrugations 2. The skin 1 is formed using a substrate material impregnated with a curable resin, and after a shaping process, the skin is cured to harden the resin. The shaping of the substrate material is carried out by forming a flexible corrugated mould (not shown) using a master tool, applying the resin impregnated substrate material to the flexible corrugated mould, and shaping the mould and the substrate material thereon by applying them to a curved rigid former (not shown).

In particular, the flexible corrugated mould is made by applying silicone rubber to a master tool comprising a corrugated rigid mould, which does not have any curvature. Once the silicone rubber has been cast, the resulting flexible rubber mould is removed from the master tool. A layer of substrate material comprising a suitable reinforcing material such as a fine carbon, glass or aramid fibre cloth, which has been pre-impregnated with an epoxy resin, is optionally covered with FEP (flourinated ethylene propylene), which is a melt-processible non-stick agent facilitating removal of the skin from the mould post curing. The substrate material is then applied to the flexible rubber mould, ensuring that the cloth is worked into the corrugations of the mould.

Preferably, the fibres of the aramid cloth are oriented at an angle of 45° to the intended corrugations. This reduces the occurrence of weak points arising along the corrugations due to the curvature imposed on the cloth where it has been folded. The orientation of the fibres relative to the corrugations is shown in Fig. 1 by reference lines 3.

Following the working of the cloth into the mould, the mould is placed onto the former, which comprises a curved Aluminium sheet, having the intended shape of the skin. The assembly is then cured to harden the resin. After curing, the skin is demoulded.

One option for curing the assembly is to use known heat curing processes, wherein the assembly is bagged, working the bag into the corrugations and a thin nylon peel ply is used as a breather between the bag and the skin.

As can be seen in Fig. 2, the resulting skin section 1 is flexible in a direction perpendicular to the corrugations and can be easily folded into a desired shape. However, along the corrugations the skin section 1 is stiff and substantially retains its corrugated form. The skin 1 is held in its folded configuration by constraining means 4.

Figs. 3 and 4 are cross-sectional schematic views of skin sections 1 having blade corrugations and balanced corrugations respectively. These Figures illustrate an alternative technique of manufacturing the skin, wherein the shaping of the skin is performed by folding the substrate material in between a series of forming bars 5. The bars 5 are placed one at a time and the material is folded as desired before applying a further bar. As before, the material can be pre-impregnated with an epoxy resin. The bars may comprise Aluminium or other suitable materials such as nylon or PTFE.

The use of forming bars 5 leads to particularly well-defined corrugations, because each bar 5 is applied sequentially after introducing a fold into the material. In techniques where the substrate material is worked into a corrugated mould, it is difficult to ensure perfect contact between the material and the mould and gaps usually remain.

The particular process used in Fig 3 is as follows: pre-impregnated aramid cloth is covered with FEP and if heat curing is to be utilised, a thin nylon peel ply is placed as a breather on either side of the material and the combination of materials is bagged for autoclaving. A first Aluminium bar is placed over an edge of material and the material is then folded up to form a first fold 7. A second bar is placed against the fold 7 and the material is then folded down thereover to form a corrugation peak 10. The second bar is then removed and a bar is placed against the material to form a second fold 8, which extends downwardly. This process is repeated until all bars are used up or until all the material has been folded. Weights and/or tape can be used to hold the resulting assembly in place. The curing is then carried out as normal and the skin is demoulded by removing the bars and the additional layers.

The process used in Fig. 4 is substantially similar to that of Fig. 3, but after forming a first fold 6 and placing a second bar thereagainst and folding the material around the second bar, the second bar is left in place to maintain the balanced corrugation structure. Again the folding process can be repeated until all the material is folded.

The shape of the resulting skin is governed by the shape of the forming bars, and can take a wide variety of forms. For instance, the bars can be curved and/or can have a sequentially varying geometry allowing complex skin shapes to be created. It is to be understood that the above described techniques can be used to make skins that are not curved along the corrugations as well as those that are curved.

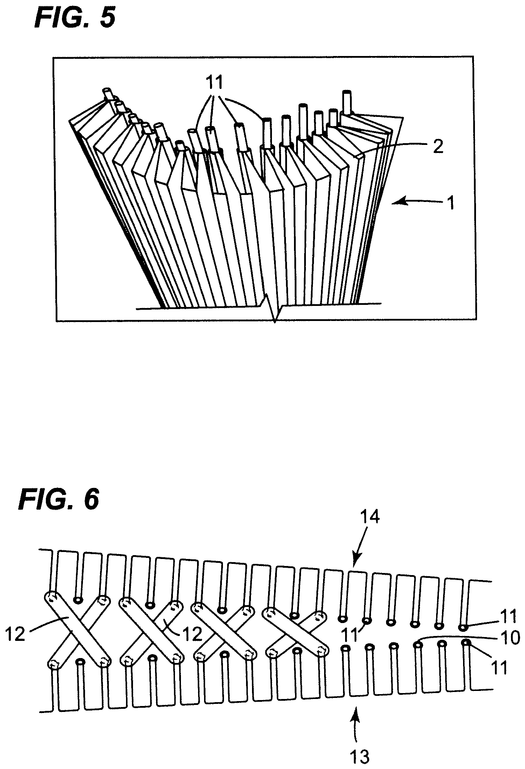

Fig. 5 shows an example of a skin section 1, wherein a rod 11 is situated within one or more of the corrugations 2 and can extend outwardly from the end thereof. Preferably, a rod 11 is provided in each of the corrugations. The rod 11 can be made from carbon composite for example and is used to connect the skin section to another component such as another skin section or another part of the aircraft fuselage. In practice, the rods can be incorporated most conveniently by using the above mentioned sequential bar technique, by inserting rods 11 during the folding process. The rods 11 are favourably held in place between first and second folds 7, 8 at the corrugation peaks 10, when inserted in conjunction with the method described in relation to Fig. 3. The inclusion of the rods 11 leads to rounded corrugation peaks 10. As an alternative the rods can be incorporated in the skin after the moulding and curing process.

An example of the way in which the rods 11 can be utilised is shown in Fig. 6. Connection means comprising connectors 12 are engaged with the rods in a suitable configuration to interconnect a first skin section 13 and a second skin section 14, thereby forming a morphing structure. The connectors 12 can be arranged in any suitable way to give a desired shape to the skin structure and the connectors can optionally be adjustable to vary the geometry of the morphing structure. Further, the connectors 12 need not be in the same plane as one another, since the skin is rigid along the corrugations. In this regard, it is possible to cut notches (not shown) in the skin, allowing access to the rods running along the corrugations so that they can be joined to the connectors 12.

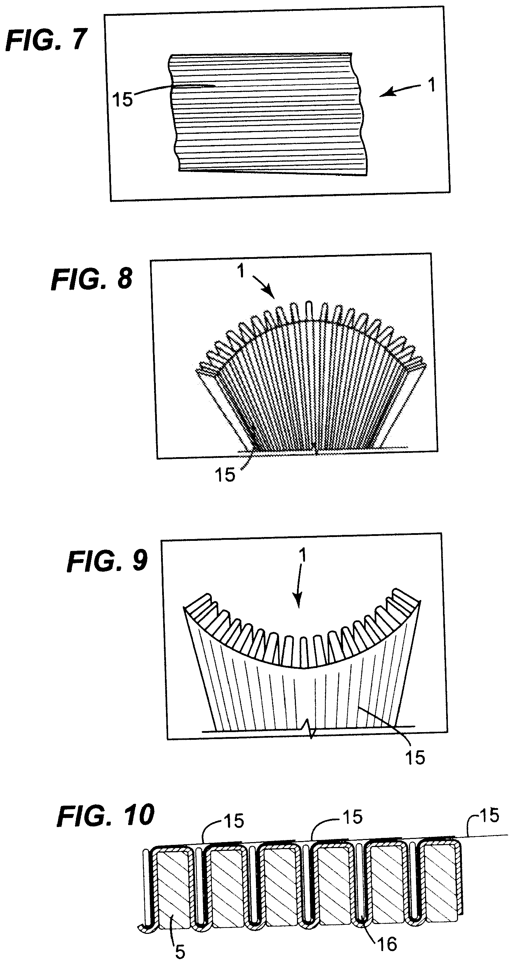

Figs 7 to 10 show a further embodiment of the skin, wherein a flap portion 15 is inserted in each corrugation and extends out of the corrugation sufficiently far to cover a portion of the skin. Preferably, the flap portion covers an adjacent corrugation and extends the entire length of the corrugation. By providing a series of flaps along the surface of the skin, the surface is substantially smooth and still provides the flexibility of the corrugations. The flap portion comprises a separate piece of material 15 connected to the substrate material of the skin and it is movable relative to the adjacent corrugation.

The process by which the flaps 15 are incorporated into the skin is discussed now with reference to Fig. 10. Again, a pre-impregnated aramid cloth is used for the main body of the skin section, although now, the cloth is covered with FEP only on one side, for example on the under side. The process is akin to that described with reference to Fig. 4, except Aluminium former bars 5 are used on the under side of the cloth and Silicone rubber bars 16 are used in place of the A1 bars on the upper side of the cloth. The Si rubber bars are approximately 3 cm longer than the A1 bars, which allows them to be gripped for pulling out of the cured assembly. Before each Si rubber bar is inserted, a pre-impregnated cloth strip 15 is inserted against the skin, the strip also having a FEP coating on one side only. The FEP coating is on the side of the cloth strip 15 that faces away from the skin, while the FEP coating on the main body of the skin is on the side opposite to the strip (ie. the underside), so that the strip sticks to the skin on its side facing the skin and does not stick elsewhere. The advantage of using Si rubber bars instead of A1 bars against the upper side of the skin is that the Si rubber does not stick to the skin during the curing process and can survive curing temperatures. Once all the A1 and Si rubber bars are in place, the whole assembly is bagged and cured. The demoulding is performed by pulling out the Si rubber strips and removing the tooling bars and the FEP release layers. The resulting corrugated skin has a substantially smooth surface which is still flexible.

Fig. 7 shows the corrugated skin with flaps in a flat configuration. Fig. 8 shows the skin 1 in a curved configuration with the flaps on a concave face of the skin, whilst Fig. 9 shows the skin curved in the other direction with the flaps 15 located on a convex face of the skin. In either case, the surface presented is substantially smooth. In aerodynamic terms, it is clearly desirable to have smooth surfaces for the wings and fuselage of an aircraft.

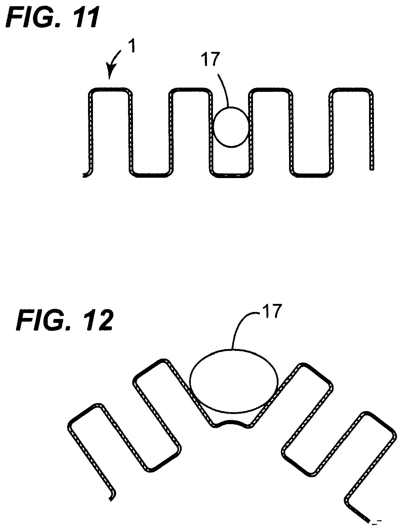

In a further embodiment of the invention, shown in Figs 11 and 12, manipulation means 17 are provided in one or more of the corrugations for adjusting the configuration of the skin. The manipulation means can comprise an inflatable sac 17 disposed between a pair of corrugations such that when the sac is inflated, as illustrated in Fig. 12, the corrugations are pushed apart, thereby altering the degree of folding of the skin.

The forming and folding processes discussed herein can all be carried out either manually or using an automated process.

## Claims

1. A skin (13) for a morphing structure of an aircraft, said skin comprising:
one or more corrugations (2);
a rod (11) situated within one or more of the corrugations (2); **characterized in that** it further comprises connection means engaged with the rod (11) in a configuration for connecting the skin (13) to a second skin (14), the connection means (12) arranged to give a desired shape to the skin (13).

2. The skin (13) of claim 1, wherein the corrugations comprise blade corrugations or balanced corrugations (2).

3. The skin (13) of either of claim 1 or 2, wherein the skin is curved along the length of the corrugations (2).

4. The skin (13) of any preceding claim, wherein a flap portion (15) is inserted in each corrugation (2) and extends out of the corrugation sufficiently far to cover a portion of the skin (1,13).

5. The skin (13) of claim 4, wherein the flap portion (15) covers an adjacent corrugation (2).

6. The skin (13) of claim 4 or 5, wherein the flap portion (15) extends the entire length of the corrugation (2).

7. The skin (13) of any of claims 4 to 6, wherein the flap portion (15) comprises a separate piece of material connected to a substrate material of the skin.

8. The skin (13) of claim 5, wherein the flap portion (15) is movable relative to the adjacent corrugation (2).

9. A method of manufacturing a skin (13) for a morphing structure of an aircraft, comprising:
shaping the skin to a desired form including one or more corrugations (2);
situating a rod (11) within one or more of the corrugations (2);
interconnecting the skin (13) to a second skin (14) with a connection means (12) engaged with the rod (11); and
adjusting the connection means (12) to give a desired shape to the skin (13).

## Patentansprüche

1. Haut (13) für eine formvariable Struktur eines Flugzeugs, wobei die Haut Folgendes umfasst:
eine oder mehrere Wellungen (2);
eine Stange (11), die innerhalb einer oder mehrerer der Wellungen (2) untergebracht ist;
**dadurch gekennzeichnet, dass** sie weiter Verbindungsmittel umfasst, die mit der Stange (11) in einer Konfiguration zum Verbinden der Haut (13) mit einer zweiten Haut (14) in Eingriff stehen, wobei die Verbindungsmittel (12) so angeordnet sind, dass sie der Haut (13) eine gewünschte Form geben.

2. Haut (13) nach Anspruch 1, wobei die Wellungen Klingenwellungen oder symmetrische Wellungen (2) umfassen.

3. Haut (13) nach Anspruch 1 oder 2, wobei die Haut entlang der Länge der Wellungen (2) gekrümmt ist.

4. Haut (13) nach einem der vorstehenden Ansprüche, wobei ein Laschenteil (15) in jede Wellung (2) eingesetzt ist und sich ausreichend weit aus der Wellung erstreckt, um einen Teil der Haut (1,13) zu bedecken.

5. Haut (13) nach Anspruch 4, wobei der Laschenteil (15) eine benachbarte Wellung (2) bedeckt.

6. Haut (13) nach Anspruch 4 oder 5, wobei sich der Laschenteil (15) über die gesamte Länge der Wellung (2) erstreckt.

7. Haut (13) nach einem der Ansprüche 4 bis 6, wobei der Laschenteil (15) ein separates Materialstück umfasst, das mit einem Substratmaterial der Haut verbunden ist.

8. Haut (13) nach Anspruch 5, wobei der Laschenteil (15) in Bezug auf die benachbarte Wellung (2) bewegbar ist.

9. Verfahren zur Herstellung einer Haut (13) für eine formvariable Struktur eines Flugzeugs, umfassend:
Formen der Haut zu einer gewünschten Form einschließlich einer oder mehrerer Wellungen (2);
Unterbringen einer Stange (11) in einer oder mehreren der Wellungen (2);
Verbinden der Haut (13) mit einer zweiten Haut (14) mit einem Verbindungsmittel (12), das mit der Stange (11) in Eingriff steht; und
Einstellen des Verbindungsmittels (12), um der Haut (13) eine gewünschte Form zu geben.

## Revendications

1. Peau (13) pour une structure de morphage d'un aéronef, ladite peau comprenant :
une ou plusieurs ondulations (2) ;
une tige (11) située dans une ou plusieurs des ondulations (2) ;
**caractérisée en ce qu'**elle comprend en outre des moyens de liaison engagés sur la tige (11) dans une configuration permettant de relier la peau (13) à une seconde peau (14), les moyens de liaison (12) étant agencés pour donner une forme souhaitée à la peau (13).

2. Peau (13) selon la revendication 1, dans laquelle les ondulations comprennent des ondulations formant pales ou des ondulations équilibrées (2).

3. Peau (13) selon l'une quelconque des revendications 1 ou 2, dans laquelle la peau est incurvée sur la longueur des ondulations (2).

4. Peau (13) selon l'une quelconque des revendications précédentes, dans laquelle une partie de volet (15) est insérée dans chaque ondulation (2) et s'étend hors de l'ondulation suffisamment loin pour couvrir une partie de la peau (1, 13).

5. Peau (13) selon la revendication 4, dans laquelle la partie de volet (15) recouvre une ondulation adjacente (2).

6. Peau (13) selon la revendication 4 ou 5, dans laquelle la partie de volet (15) s'étend sur toute la longueur de l'ondulation (2).

7. Peau (13) selon l'une quelconque des revendications 4 à 6, dans laquelle la partie de volet (15) comprend une pièce de matériau séparée raccordée à un matériau substrat de la peau.

8. Peau (13) selon la revendication 5, dans laquelle la partie de volet (15) est mobile par rapport à l'ondulation adjacente (2).

9. Procédé de fabrication d'une peau (13) pour une structure de morphage d'un aéronef, comprenant :
la conformation de la peau à une forme souhaitée incluant une ou plusieurs ondulations (2) ;
la disposition d'une tige (11) dans une ou plusieurs des ondulations (2) ;
l'interconnexion de la peau (13) avec une seconde peau (14) avec un moyen de liaison (12) engagé sur la tige (11) ; et
l'ajustement du moyen de liaison (12) pour donner une forme souhaitée à la peau (13).
